# EUROPEAN PATENT APPLICATION

(11) **EP 4 818 963 A1**
(43) Date of publication of application: **07.10.2026**
(21) Application number: 24896181.5
(22) Date of filing: 01.11.2024
(51) Int. Cl.: G06F 40/289

(54) **PRODUCT STRUCTURED INFORMATION DETERMINATION METHOD AND APPARATUS, AND DEVICE**

(30) Priority: 30.11.2023 CN 202311631051
(71) Applicant: Hangzhou Alibaba International Internet Industry Co., Ltd., Hangzhou, Zhejiang 310052 (CN)
(72) Inventor: ZHOU, Renhao, Hangzhou, Zhejiang 310052 (CN); WU, Feifei, Hangzhou, Zhejiang 310052 (CN)
(74) Representative: Wu, Ting
(86) International application number: PCT/CN2024/129492
(87) International publication number: WO 2025/113090

(57) **Abstract**

Embodiments of the present disclosure provide a method, apparatus, and device for determining structured product information. The method for determining structured product information includes: acquiring category information and attribute items of products in a first e-commerce platform; determining at least one second e-commerce platform different from the first e-commerce platform and product information of products in the second e-commerce platform; determining, based on the category information and attribute items, optional attribute items corresponding to products in the second e-commerce platform; determining, based on the product information and the optional attribute items, structured information of products in the second e-commerce platform, where the structured information includes at least target attribute items. The technical solution provided by this embodiment effectively achieves the determination of structured product information of products in the off-site platform based on the category information and attribute items of products in the in-site platform, which not only improves the accuracy of determining structured product information of products, but also ensures the practicability of the method.

## Description

This disclosure claims priority to the Chinese patent application filed with the China National Intellectual Property Administration on November 30, 2023, with application number 202311631051.X, and entitled "Method, Apparatus, and Device for Determining Structured Product Information," the entire contents of which are incorporated by reference into this disclosure.

### TECHNICAL FIELD

The present disclosure relates to the field of information processing, and more particularly to a method, apparatus, and device for determining structured product information.

### BACKGROUND

In e-commerce application scenarios, structured product information is of great significance. Currently, structured product information is often extracted using the Named Entity Recognition (abbreviated as NER) algorithm model. However, since there are many types of e-commerce platforms and the product expressions across different e-commerce platforms vary considerably, using the same NER algorithm model to perform the extraction operation of structured product information tends to reduce the accuracy of extracting structured product information.

### SUMMARY

Embodiments of the present disclosure provide a method, apparatus, and device for determining structured product information, capable of improving the accuracy of extracting structured product information.

In a first aspect, embodiments of the present disclosure provide a method for determining structured product information, comprising:
acquiring category information and attribute items of products in a first e-commerce platform;
determining at least one second e-commerce platform different from the first e-commerce platform and product information of products in the second e-commerce platform; determining, based on the category information and attribute items, optional attribute items corresponding to products in the second e-commerce platform; determining, based on the product information and the optional attribute items, structured information of products in the second e-commerce platform, where the structured information includes at least target attribute items.

In a second aspect, embodiments of the present disclosure provide an apparatus for determining structured product information, comprising:
a first acquisition module, configured to acquire category information and attribute items of products in a first e-commerce platform; a first determination module, configured to determine at least one second e-commerce platform different from the first e-commerce platform and product information of products in the second e-commerce platform; the first determination module, configured to determine, based on the category information and attribute items, optional attribute items corresponding to products in the second e-commerce platform; a first processing module, configured to determine, based on the product information and the optional attribute items, structured information of products in the second e-commerce platform, where the structured information includes at least target attribute items.

In a third aspect, embodiments of the present disclosure provide an electronic device, comprising: a memory and a processor; where the memory is configured to store one or more computer instructions, and the one or more computer instructions, when executed by the processor, implement the method for determining structured product information described in the first aspect above.

In a fourth aspect, embodiments of the present disclosure provide a computer storage medium for storing a computer program, where the computer program, when executed by a computer, implements the method for determining structured product information described in the first aspect above.

In a fifth aspect, embodiments of the present disclosure provide a computer program product, comprising: a computer-readable storage medium having computer instructions stored thereon, where when the computer instructions are executed by one or more processors, the one or more processors are caused to perform the steps of the method for determining structured product information as described in the first aspect above.

The technical solution provided by this embodiment, by acquiring category information and attribute items of products in a first e-commerce platform; determining at least one second e-commerce platform different from the first e-commerce platform and product information of products in the second e-commerce platform; then determining, based on the category information and attribute items, optional attribute items corresponding to products in the second e-commerce platform; and determining, based on the product information and the optional attribute items, structured information of products in the second e-commerce platform, effectively achieves the determination of structured information of products in the off-site platform based on the category information and attribute items of products in the in-site platform, thereby facilitating corresponding processing operations based on the structured product information of products, which not only improves the accuracy of determining structured product information of products, but also ensures the practicability of the method, and is conducive to market promotion and application.

### BRIEF DESCRIPTION OF THE DRAWINGS

In order to more clearly illustrate the technical solutions in the embodiments of the present disclosure or in the prior art, the following briefly introduces the drawings required for describing the embodiments or the prior art. Obviously, the drawings described below are some embodiments of the present disclosure, and those of ordinary skill in the art may obtain other drawings based on these drawings without creative effort.
FIG. 1 is a schematic diagram of a scenario of a method for determining structured product information provided by an embodiment of the present disclosure;
FIG. 2 is a schematic flowchart of a method for determining structured product information provided by an embodiment of the present disclosure;
FIG. 3 is a schematic flowchart of determining structured information of products in the second e-commerce platform based on the product information and optional attribute items, provided by an embodiment of the present disclosure;
FIG. 4 is a schematic flowchart of another method for determining structured product information provided by an embodiment of the present disclosure;
FIG. 5 is a schematic flowchart of yet another method for determining structured product information provided by an embodiment of the present disclosure;
FIG. 6 is a first schematic diagram illustrating the principles of a method for determining structured product information provided by an application embodiment of the present disclosure;
FIG. 7 is a second schematic diagram illustrating the principles of a method for determining structured product information provided by an application embodiment of the present disclosure;
FIG. 8 is a first schematic diagram illustrating generation of prompt information provided by an application embodiment of the present disclosure;
FIG. 9 is a second schematic diagram illustrating generation of prompt information provided by an application embodiment of the present disclosure;
FIG. 10 is a third schematic diagram illustrating generation of prompt information provided by an application embodiment of the present disclosure;
FIG. 11 is a schematic structural diagram of an apparatus for determining structured product information provided by an application embodiment of the present disclosure;
FIG. 12 is a schematic structural diagram of an electronic device corresponding to the apparatus for determining structured product information provided by the embodiment shown in FIG. 11.

### DETAILED DESCRIPTION OF THE EMBODIMENTS

To make the objectives, technical solutions, and advantages of the embodiments of the present disclosure clearer, the technical solutions in the embodiments of the present disclosure will be described clearly and completely below with reference to the drawings in the embodiments of the present disclosure. It is apparent that the described embodiments are some, but not all, embodiments of the present disclosure. Based on the embodiments of the present disclosure, all other embodiments obtained by those of ordinary skill in the art without creative effort shall fall within the scope of protection of the present disclosure.

The terminology used in the embodiments of the present disclosure is for the purpose of describing particular embodiments only and is not intended to limit the present disclosure. The singular forms "a" and "the" used in the embodiments of the present disclosure and the appended claims are also intended to include plural forms, unless the context clearly indicates otherwise. "Multiple" generally includes at least two, but does not exclude the case of including at least one.

It should be understood that the term "and/or" as used herein is merely a description of an association relationship of associated objects, indicating that three relationships may exist. For example, A and/or B may represent: A exists alone, A and B exist simultaneously, and B exists alone. In addition, the character "/" herein generally indicates that the associated objects before and after it are in an "or" relationship.

Depending on the context, the words "if" and "when" as used herein may be interpreted as "at the time of" or "when" or "in response to determining" or "in response to detecting." Similarly, depending on the context, the phrases "if determined" or "if detected (a stated condition or event)" may be interpreted as "when determined" or "in response to determining" or "when (a stated condition or event) is detected" or "in response to detecting (a stated condition or event)."

It should also be noted that the terms "comprising," "including," or any other variants thereof are intended to cover non-exclusive inclusion, such that a product or system comprising a series of elements includes not only those elements but also other elements not explicitly listed, or elements inherent to such a product or system. Without further limitation, an element defined by the phrase "comprising a..." does not exclude the existence of additional identical elements in a product or system that comprises such elements.

In addition, the sequence of steps in each of the following method embodiments is merely an example and is not strictly limiting.

### Term Definitions:

Named Entity Recognition (NER): refers to a technology in the field of natural language processing for automatically identifying and classifying entities appearing in text; it can identify named entities, such as person names, place names, and organization names, and annotate them with their corresponding categories.

CPV (Category, Property, Value): represents category, attribute, and attribute value of a product.

Category: also known as the product classification, refers to a collection of products sharing one or more common characteristics; it can be divided into multiple levels of categories according to the granularity of classification, for example: clothing-menswear-jacket, where clothing is the first-level category, menswear is the second-level category, and jacket is the leaf category.

Attribute: a characteristic of a particular product; the attribute value is the specific content of the attribute; for example, the attributes of a product may include color, size, collar type, sleeve type, etc., and the attribute values of the color attribute include red, pink, brown, etc.

Product term: refers to the name of a brand or product, typically used in the commercial field to refer to a specific product or service; for example, dress, pajamas, and excavator are all product terms.

Large Language Model (abbreviated as LLM): refers to natural language processing models based on deep learning, which use neural networks for training and can automatically learn the patterns and features of natural language, thereby implementing tasks such as language modeling, text generation, machine translation, and speech recognition. These models typically require large-scale data and computing resources for training, and are therefore referred to as "large" language models.

ChatGPT: a natural language processing model based on the Transformer architecture, capable of generating and understanding natural language text.

To facilitate understanding of the specific implementation process and implementation effects of the method, apparatus, and device for determining structured product information in the present embodiment, the related technology is briefly described below:

With the rapid development of e-commerce platforms, various types of e-commerce platforms have risen quickly. For any e-commerce platform, structured product information within the e-commerce platform is of significant importance. For example, the structured information of products in off-site platforms can help operators and merchants identify external demands, quickly capture and explore opportunity markets and selling points, and the obtained opportunity markets and selling points serve as important references for operators in category planning, which can guide product supply and placement strategies on the website.

Currently, the structured product information of products is often obtained by using Named Entity Recognition (abbreviated as NER) algorithm models to extract information from products on off-site platforms, and can identify trend attributes and selling points, etc. However, since there are many types of e-commerce platforms and the product expressions differ greatly across different e-commerce platforms, in order to accurately obtain the structured product information of products on each e-commerce platform, different e-commerce platforms may be configured with different NER algorithm models. Since any single NER algorithm model has limited capability to understand off-site products, when using the same NER algorithm model to perform the structured information extraction operation, the NER algorithm model can only accurately perform information extraction operations on products within the in-site platform, whereas for products on off-site platforms, the information that can be extracted is limited and semantic understanding is poor, which tends to reduce the accuracy of determining the structured product information of products.

Alternatively, if different NER algorithm models are used to perform the structured information extraction operation, the training efficiency of the NER algorithm models is relatively low. Moreover, for each NER algorithm model, data collection, annotation, and model training operations are all required. When the trained NER algorithm model does not meet the expected requirements, the entire model training and data processing processes still need to be performed again, resulting in relatively low efficiency of data extraction.

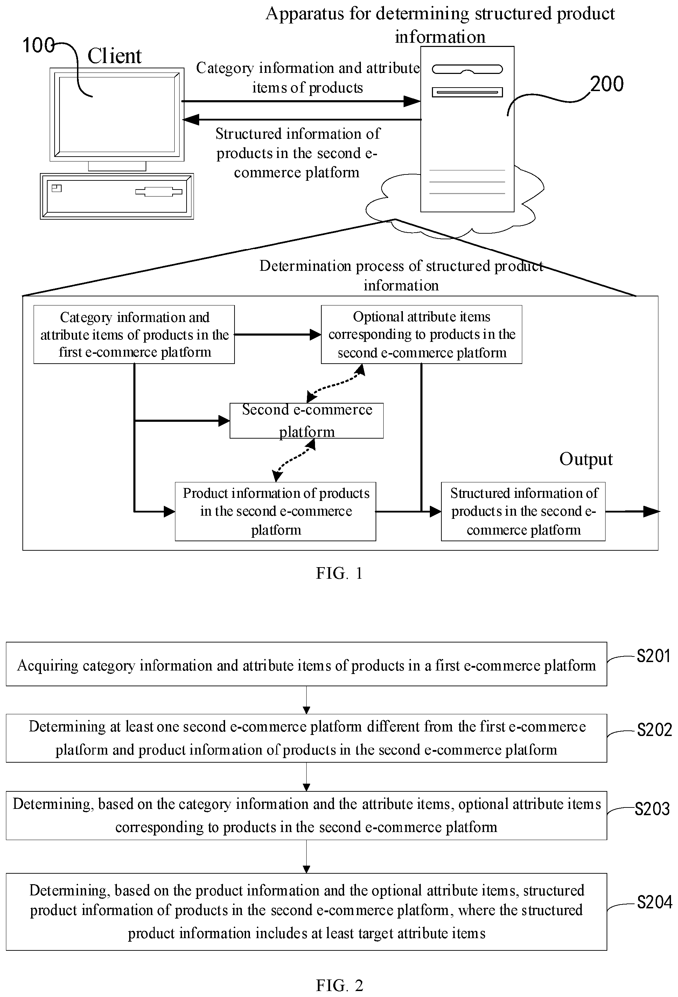

In order to solve the above technical problems, the present embodiment provides a method, apparatus, and device for determining structured product information. Referring to FIG. 1, the execution subject of the method for determining structured product information is the apparatus for determining structured product information 200, and the apparatus for determining structured product information 200 is communicatively connected to a client 100. It should be noted that the apparatus for determining structured product information 200 may be implemented as a personal computer, a tablet computer, a local server, or a cloud server. When the apparatus for determining structured product information 200 is implemented as a cloud server, the method for determining structured product information may be executed in the cloud, where a number of computing nodes (cloud servers) may be deployed, and each computing node has processing resources such as computing and storage. In the cloud, multiple computing nodes may be organized to provide a certain service; of course, a single computing node may also provide one or more services. The manner in which the cloud provides the service may be by providing external service interfaces, which users invoke to use the corresponding services. Service interfaces include forms such as Software Development Kit (SDK), Application Programming Interface (API), and the like.

The client 100 is used by users (e.g., operations and maintenance personnel of an e-commerce platform) for application purposes, so as to be able to implement the operation of determining structured product information. The client 100 described above may be any computing device having a certain data transmission capability. In specific implementations, the client 100 may be a mobile phone, a personal computer (PC), a tablet computer, a set application program, etc. In addition, the basic structure of the client 100 may include: at least one processor. The number of processors depends on the configuration and type of the client 100. The client 100 may also include a memory, which may be volatile, such as Random Access Memory (abbreviated as RAM), or non-volatile, such as Read-Only Memory (abbreviated as ROM), flash memory, etc., or may include both types simultaneously. The memory typically stores an operating system (abbreviated as OS), one or more application programs, and may also store program data, etc. In addition to the processing unit and memory, the client 100 also includes some basic configurations, such as a network interface chip, an IO bus, a display component, and some peripheral devices, etc. Optionally, some peripheral devices may include, for example, a keyboard, a mouse, a stylus, a printer, etc. Other peripheral devices are well known in the art and will not be described in further detail herein.

The apparatus for determining structured product information 200 refers to a device capable of providing structured product information determination operations in a network virtual environment, and generally refers to an apparatus that utilizes a network for information planning and structured product information determination operations. In terms of physical implementation, the apparatus for determining structured product information 200 may be any device capable of providing computing services, responding to structured product information determination requests, and performing structured product information determination operations based on such requests, for example: a cluster server, a conventional server, a cloud server, a cloud host, a virtual center, or the like. The apparatus for determining structured product information 200 is primarily composed of a processor, a hard disk, a memory, a system bus, and the like, similar to a general-purpose computer architecture.

In the above-described embodiment, the client 100 establishes a network connection with the apparatus for determining structured product information 200, and the network connection may be a wireless or wired network connection. If the client 100 is in communication connection with the apparatus for determining structured product information 200, the network standard of the mobile network may be any one of 2G (GSM (Global System for Mobile Communications)), 2.5G (GPRS (General Packet Radio Service)), 3G (WCDMA (Wideband Code Division Multiple Access), TD-SCDMA (Time Division Synchronous Code Division Multiple Access), CDMA2000 (Code Division Multiple Access 2000), UTMS (Universal Mobile Telecommunications System)), 4G (LTE (Long Term Evolution)), 4G+ (LTE+ (Long Term Evolution Advanced)), WiMax (Worldwide Interoperability for Microwave Access), 5G (fifth-generation global mobile communications system), 6G (sixth-generation global mobile communications system), and the like.

When a user has a need to determine structured product information, client 100 may generate or obtain a request for determining structured product information. In some instances, the request for determining structured product information may be obtained based on a human-machine interaction operation, in which case client 100 may display a human-machine interaction interface, obtain an interaction operation entered by the user in the human-machine interaction interface, and obtain and determine the request for determining structured product information based on the interaction operation; alternatively, the request for determining structured product information may be obtained through transmission via a preset interface or a third device, in which case obtaining the request for determining structured product information may include: obtaining a communication interface on client 100; and obtaining the request for determining structured product information actively or passively transmitted by a third device communicatively connected to the communication interface. After obtaining the request for determining structured product information, in order to accurately perform the determination operation of structured product information, the request for determining structured product information may be sent to the apparatus for determining structured product information 200, so that the apparatus for determining structured product information 200 performs the determination operation of structured product information.

The apparatus for determining structured product information 200 is configured to acquire a request for determining structured product information sent by a client 100, and then acquire category information and attribute items of products in a first e-commerce platform (i.e., the in-site platform) based on the request for determining structured product information, where the products in the first e-commerce platform may refer to all products that can be displayed on a display page, the category information of a product may be a second-level category, a third-level category, or a leaf category of the product, and in some examples, the category information of a product may preferably be a leaf category.

In order to accurately determine the structured information of products in a second e-commerce platform (i.e., the off-site platform) other than the first e-commerce platform, at least one second e-commerce platform different from the first e-commerce platform, as well as title information and description information of products in the second e-commerce platform, may first be determined, where the products in the second e-commerce platform may refer to all products that can be displayed on the display page, the title information may refer to the name information of the products, and the description information may refer to information used in the second e-commerce platform to provide detailed descriptions of the products, so that users can quickly learn about the products through the description information.

After acquiring the category information and attribute items of products in the first e-commerce platform, the category information and attribute items may be analyzed and processed, so that the optional attribute items corresponding to products in the second e-commerce platform may be determined; thereafter, the title information, description information, and optional attribute items may be analyzed and processed to determine the structured product information of products in the second e-commerce platform, where the structured product information includes at least the target attribute items; thereby effectively achieving accurate determination of the structured product information of products in the second e-commerce platform based on the category information and attribute items of products in the first e-commerce platform, and further improving the accuracy of determining structured product information; thereafter, opportunity market or selling point mining operations may be performed based on the obtained structured product information, further improving the practicality of the method.

Some embodiments of the present disclosure are described in detail below with reference to the drawings. Where there is no conflict among the various embodiments, the following embodiments and features thereof may be combined with one another. In addition, the sequence of steps in each of the following method embodiments is merely an example and is not strictly limiting.

FIG. 2 is a schematic flowchart of a method for determining structured product information provided by an embodiment of the present disclosure. With reference to FIG. 2, the present embodiment provides a method for determining structured product information, the execution subject of which is the apparatus for determining structured product information. It is understood that the apparatus for determining structured product information may be implemented as software, or a combination of software and hardware. Specifically, when the apparatus for determining structured product information is implemented as hardware, it may be various electronic devices having operations for determining structured product information, including but not limited to personal computers, servers, and the like; when the apparatus for determining structured product information is implemented as software, it may be installed in the electronic devices listed above. Moreover, in different application scenarios, the apparatus for determining structured product information may be deployed in different application platforms. Based on the above-described apparatus for determining structured product information, the method for determining structured product information achievable in the present embodiment may include:
Step S201: acquiring category information and attribute items of products in a first e-commerce platform.
Step S202: determining at least one second e-commerce platform different from the first e-commerce platform and product information of products in the second e-commerce platform.
Step S203: determining, based on the category information and the attribute items, optional attribute items corresponding to products in the second e-commerce platform.
Step S204: determining, based on the product information and the optional attribute items, structured product information of products in the second e-commerce platform, where the structured product information includes at least target attribute items.

The following provides a detailed description of the specific implementation process and implementation effects of each of the above steps:
Step S201: acquiring category information and attribute items of products in a first e-commerce platform.

When a user has a need to determine structured product information, in order to implement the operation of determining structured product information, the category information and attribute items of products in the first e-commerce platform may be acquired; the products in the first e-commerce platform may refer to all products that can be displayed on the display page of the first e-commerce platform; the category information of products may refer to the secondary category, tertiary category, or leaf category of the products; and the attribute items may refer to attribute information corresponding to the name or title of the products. For example, when the name of a product is "red puff-sleeve dress," the attribute items may include: "color attribute" corresponding to "red," "sleeve style attribute" corresponding to "puff sleeve," and "product type attribute" corresponding to "dress." When the title of a product is "blue cotton shirt," the attribute items may include: "color attribute" corresponding to "blue," "material attribute" corresponding to "cotton," and "product type attribute" corresponding to "shirt," and so on.

Specifically, this embodiment does not limit the specific manner of acquiring the category information and attribute items of products in the first e-commerce platform. In some examples, the category information and attribute items of products in the first e-commerce platform may be stored in a preset region of the first e-commerce platform, and the category information and attribute items of products in the first e-commerce platform may be acquired by accessing the preset region.

In other examples, the category information and attribute items of products in the first e-commerce platform may be acquired not only by accessing the preset region, but also by performing information extraction on the first e-commerce platform. In this case, acquiring the category information and attribute items of products in the first e-commerce platform may include: acquiring a display interface of the first e-commerce platform; performing an information extraction operation on the display interface to obtain products in the first e-commerce platform; and then determining the category information and attribute items corresponding to the products in the first e-commerce platform, thereby effectively ensuring the accuracy and reliability of determining the category information and attribute items of products in the first e-commerce platform.

Step S202: determining at least one second e-commerce platform different from the first e-commerce platform and product information of products in the second e-commerce platform.

In the e-commerce field, multiple e-commerce platforms are often configured. In this case, a first e-commerce platform and at least one second e-commerce platform different from the first e-commerce platform may be configured in the e-commerce field. For the operations and maintenance personnel of the first e-commerce platform, the first e-commerce platform may serve as an in-site platform, and the second e-commerce platform may serve as an off-site platform. In order to accurately determine the structured information of products in other e-commerce platforms (i.e., off-site platforms) based on the category information and attribute items of products in the first e-commerce platform (i.e., the in-site platform), after acquiring the category information and attribute items of products in the first e-commerce platform, at least one second e-commerce platform different from the first e-commerce platform and the product information of products in the second e-commerce platform may be determined. It should be noted that when there are multiple e-commerce platforms, the product information of products in each e-commerce platform may be acquired; when there is only one e-commerce platform, the product information of products in the current second e-commerce platform may be acquired. In addition, the products in the second e-commerce platform may be some or all of the products displayable on the display interface of the platform. The product information may be the sum of all information associated with a product. In some examples, the product information may include title information and description information of the product. The title information of the product may be the name information of the product, and the category to which the product belongs may be determined from the title information. The description information of the product may be detailed introductory information and promotional information used to describe the product.

In some examples, when the product information includes title information and description information, the title information and description information of the products may be obtained by performing information extraction on the second e-commerce platform; in this case, determining the title information and description information of products in the second e-commerce platform may include: after determining at least one second e-commerce platform different from the first e-commerce platform, acquiring the product category corresponding to products in the second e-commerce platform; and performing information extraction on products that can be displayed on the display interface of the second e-commerce platform according to the product category, to obtain the title information and description information of products in the second e-commerce platform.

In yet other examples, the title information and description information of products may be obtained not only through information extraction techniques, but also through the second e-commerce platform; in this case, determining the title information and description information of products in the second e-commerce platform may include: determining the communication interface corresponding to the second e-commerce platform, and actively or passively acquiring, through the communication interface of the second e-commerce platform, the title information and description information of products stored in the second e-commerce platform, thereby effectively ensuring the accuracy and reliability of determining the title information and description information of products.

Step S203: determining, based on the category information and the attribute items, optional attribute items corresponding to products in the second e-commerce platform.

Since the first e-commerce platform and the second e-commerce platform are different e-commerce platforms, products in different e-commerce platforms may have different attribute expression methods; in order to accurately determine the structured product information of products in the second e-commerce platform, the product category and attribute system of the first e-commerce platform may be used to determine the optional attribute items corresponding to products in the second e-commerce platform; specifically, after acquiring the category information and attribute items, the category information and attribute items may be analyzed and processed, so that the optional attribute items corresponding to products in the second e-commerce platform may be determined, where the optional attribute items represent the range of attribute items that can be determined for products in the second e-commerce platform.

In some examples, the optional attribute items may be obtained by analyzing and processing the category information and attribute items using a pre-trained machine learning model or neural network model; in this case, determining the optional attribute items corresponding to products in the second e-commerce platform based on the category information and attribute items may include: acquiring a pre-trained machine learning model or neural network model; inputting the category information, attribute items, and products in the second e-commerce platform into the machine learning model, to obtain the optional attribute items corresponding to products in the second e-commerce platform; it should be noted that the obtained optional attribute items may be the same as or different from the attribute items of products in the first e-commerce platform.

In other examples, the optional attribute items may be obtained not only by analyzing and processing the category information and attribute items using a machine learning model or neural network model, but also by directly analyzing and processing the category information and attribute items; in this case, determining the optional attribute items corresponding to products in the second e-commerce platform based on the category information and attribute items may include: determining, from the category information, the target category corresponding to products in the second e-commerce platform; and determining the attribute items corresponding to the target category as the optional attribute items corresponding to products in the second e-commerce platform.

Specifically, since the first e-commerce platform is an in-site platform and the second e-commerce platform is an off-site platform, the category information of products in the first e-commerce platform that is obtained is relatively comprehensive compared to that of the off-site platform; in this case, it may be considered that the category of products in the second e-commerce platform may be at least a part of the category information of products in the first e-commerce platform; therefore, in order to accurately obtain the optional attribute items corresponding to products in the second e-commerce platform, after acquiring the category information of products in the first e-commerce platform, the target category corresponding to products in the second e-commerce platform may be determined from the category information, i.e., the target category corresponding to products in the second e-commerce platform is any one of the category information of products in the first e-commerce platform.

After determining the target category corresponding to products in the second e-commerce platform, the attribute items corresponding to the target category may be determined as the optional attribute items corresponding to products in the second e-commerce platform; in this case, the obtained optional attribute items corresponding to products in the second e-commerce platform are a part of the attribute items in the first e-commerce platform, thereby effectively ensuring the accuracy and reliability of determining the optional attribute items corresponding to products in the second e-commerce platform.

Step S204: determining, based on the product information and the optional attribute items, structured product information of products in the second e-commerce platform, where the structured product information includes at least target attribute items.

After acquiring the product information and the optional attribute items, the product information and the optional attribute items may be analyzed and processed, so that the structured product information of products in the second e-commerce platform may be obtained. In some examples, the structured product information of products in the second e-commerce platform may be obtained by analyzing and processing the product information and optional attribute items using a pre-trained machine learning model or neural network model; in this case, determining the structured product information of products in the second e-commerce platform based on the product information and optional attribute items may include: acquiring a pre-trained machine learning model or neural network model, inputting the product information and optional attribute items into the pre-trained machine learning model or neural network model, and obtaining the structured product information of products in the second e-commerce platform as output by the machine learning model or neural network model, where the obtained structured product information includes at least the target attribute item, thereby effectively ensuring the accuracy and reliability of determining the structured product information of products in the second e-commerce platform.

In yet other examples, to improve the practicality of the method, after determining the structured product information of products in the second e-commerce platform, the method in this embodiment may further include: identifying whether target attribute items exist in the first e-commerce platform; and if the target attribute items do not exist in the first e-commerce platform, adding the target attribute items to the first e-commerce platform to obtain updated attribute items of products in the first e-commerce platform.

Since the first e-commerce platform and the second e-commerce platform are different e-commerce platforms, different e-commerce platforms may correspond to different attribute items. That is, the target attribute items of products in the second e-commerce platform that are obtained may be included in the attribute items of products in the first e-commerce platform, or the target attribute items of products in the second e-commerce platform may not be included in the attribute items of products in the first e-commerce platform. Therefore, after obtaining the target attribute items of products in the second e-commerce platform, the target attribute items of products in the second e-commerce platform may be analyzed and compared with the attribute items of products in the first e-commerce platform to identify whether the target attribute items exist in the first e-commerce platform. When the target attribute items do not exist in the first e-commerce platform, in order to make the attribute items of the first e-commerce platform more comprehensive, the target attribute items may be added to the first e-commerce platform, thereby obtaining the updated attribute items of products in the first e-commerce platform. When the target attribute items exist in the first e-commerce platform, the attribute items of products in the first e-commerce platform may be kept unchanged, thereby effectively enabling the attribute items of the first e-commerce platform to be updated based on the structured product information of products in the off-site platform, which further improves the comprehensiveness of the attribute items of products in the first e-commerce platform.

For example, the attribute items of products in the first e-commerce platform may include: attribute a, attribute b, attribute c, and attribute d; and the target attribute items of products in the second e-commerce platform may include: attribute a, attribute b, attribute e, and attribute f. With respect to attribute e and attribute f of products in the second e-commerce platform, since attribute e and attribute f are not included in the first e-commerce platform, the above target attribute items may be added to the first e-commerce platform to obtain the updated attribute items of products in the first e-commerce platform, where the updated attribute items may include: attribute a, attribute b, attribute c, attribute d, attribute e, and attribute f. With respect to attribute a and attribute b of products in the second e-commerce platform, since attribute a and attribute b are included in the first e-commerce platform, the attribute items of products in the first e-commerce platform may be kept unchanged.

In other examples, to further improve the practicality of the method, after determining the structured product information of products in the second e-commerce platform, an opportunity market mining operation may be performed based on the structured product information of products in the second e-commerce platform. In this case, the method in this embodiment may further include: acquiring platform transaction data and attention attributes corresponding to products in the second e-commerce platform; and determining, based on the structured product information, platform transaction data, and attention attributes of products in the second e-commerce platform, a product adjustment plan corresponding to the first e-commerce platform.

After determining the structured product information of products in the second e-commerce platform, platform transaction data and attention attributes corresponding to products in the second e-commerce platform may be acquired. The platform transaction data may be obtained by analyzing and processing log information in the second e-commerce platform, and the attention attributes may be obtained by analyzing and processing category information of products in the second e-commerce platform. In this case, acquiring the platform transaction data and attention attributes corresponding to products in the second e-commerce platform in this embodiment may include: acquiring log information in the second e-commerce platform; performing an information retrieval operation on the log information to acquire platform transaction data corresponding to products in the second e-commerce platform; determining category information of products in the second e-commerce platform; and determining attention attributes of products in the second e-commerce platform based on the category information, thereby effectively ensuring the accuracy and reliability of acquiring the platform transaction data and the attention attributes.

With respect to the platform transaction data and attention attributes, the platform transaction data may include at least one of the following: platform transaction order data, platform transaction amount data, platform transaction status data, platform transaction review data, and so on. The attention attributes may refer to attribute information capable of affecting product transaction operations. It should be noted that different products may correspond to different attention attributes. For example: for apparel products, the attention attributes may include at least one of the following: brand, color, material, silhouette, style, and so on; for electronic products, the attention attributes may include at least one of the following: brand, color, size, model, configuration, and so on; for mechanical products, the attention attributes may include at least one of the following: volume, weight, configuration, and so on.

After acquiring the structured product information, platform transaction data, and attention attributes of products in the second e-commerce platform, the structured product information, platform transaction data, and attention attributes of the products may be analyzed and processed to determine a product adjustment plan corresponding to the first e-commerce platform. In some examples, the product adjustment plan is obtained through a pre-trained machine learning model or a pre-trained neural network model. In this case, determining, based on the structured product information, platform transaction data, and attention attributes of products in the second e-commerce platform, a product adjustment plan corresponding to the first e-commerce platform may include: acquiring a pre-trained machine learning model or a pre-trained neural network model; inputting the structured product information, platform transaction data, and attention attributes of products in the second e-commerce platform into the pre-trained machine learning model or the pre-trained neural network model; and obtaining a product adjustment plan corresponding to the first e-commerce platform as output by the machine learning model or the neural network model.

For example, taking "red puff-sleeve dress" as a product on the second e-commerce platform, after determining the structured product information of the product on the second e-commerce platform, the structured product information of the product may include: a product name (dress) and target attribute items (color, sleeve type, and product type). Platform transaction data and attention attributes corresponding to the "red puff-sleeve dress" on the second e-commerce platform may then be acquired. When the platform transaction data includes platform transaction orders, the quantity and amount corresponding to the platform transaction orders may be tallied, and the platform transaction orders may then be analyzed and compared against a preset threshold. If the quantity and amount corresponding to the platform transaction orders are greater than or equal to the preset threshold, this indicates that the product on the second e-commerce platform has good sales and is able to meet market demand, and accordingly a product adjustment plan corresponding to the first e-commerce platform may be generated based on the structured product information, platform transaction data, and attention attributes of the product on the second e-commerce platform. For example, when the sales volume of the "red puff-sleeve dress" on the second e-commerce platform is relatively high, a product adjustment plan for increasing the quantity of the corresponding product may be generated, and this product adjustment plan is used to indicate increasing the published quantity or promotional information of the "red puff-sleeve dress" on the first e-commerce platform; when the sales volume of the "red puff-sleeve dress" on the second e-commerce platform is relatively low, a product adjustment plan for reducing the quantity of the corresponding product may be generated, and this product adjustment plan is used to indicate reducing the published quantity or promotional information of the "red puff-sleeve dress" on the first e-commerce platform. This is conducive to improving the transaction volume and transaction rate of the first e-commerce platform, thereby helping to enhance user stickiness on the platform and ensuring the flexible and reliable usability of the method.

The method for determining structured product information provided by this embodiment, by acquiring the category information and attribute items of products in the first e-commerce platform; determining at least one second e-commerce platform different from the first e-commerce platform and the product information of products in the second e-commerce platform; then determining optional attribute items corresponding to products in the second e-commerce platform based on the category information and attribute items; and determining structured product information of products in the second e-commerce platform based on the product information and the optional attribute items, effectively achieves the determination of structured product information of products in the off-site platform based on the category information and attribute items of products in the in-site platform, and subsequently facilitates corresponding data processing operations based on the structured product information of the products. This not only improves the accuracy of determining structured product information of products, but also ensures the flexibility and reliability of using the method, which is conducive to market promotion and application.

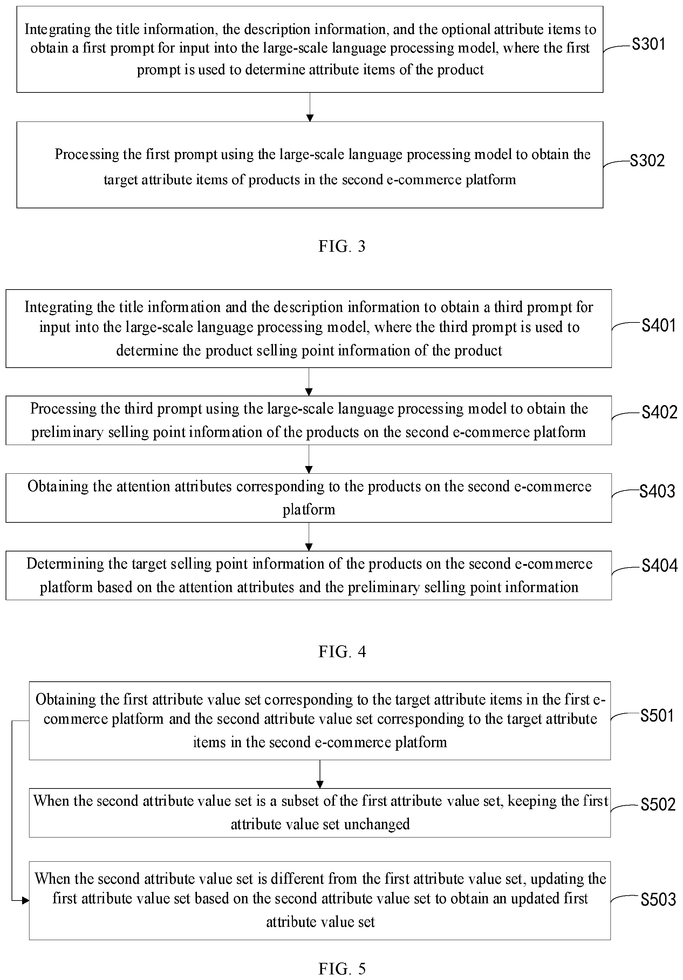

FIG. 3 is a schematic flowchart provided by an embodiment of the present disclosure for determining structured product information of products in a second e-commerce platform based on product information and optional attribute items. On the basis of the above embodiment, referring to FIG. 3, with respect to the structured product information of products in the second e-commerce platform, the structured product information of products in the second e-commerce platform may be obtained not only through a pre-trained machine learning model or a pre-trained neural network model, but also through a large-scale language processing model. When the product information includes title information and description information, determining, based on the product information and the optional attribute items, the structured product information of products in the second e-commerce platform may include:
Step S301: integrating the title information, the description information, and the optional attribute items to obtain a first prompt for input into the large-scale language processing model, where the first prompt is used to determine attribute items of the product.

Here, in order to stably obtain the structured product information of products in the second e-commerce platform through the large-scale language processing model, prompt information for input into the large-scale language processing model may first be acquired. Therefore, after acquiring the title information, description information, and optional attribute items, the title information, description information, and optional attribute items may be integrated. Specifically, a preset template for integrating the title information, description information, and optional attribute items may be acquired; and the title information, description information, and optional attribute items may be integrated according to the preset template in a natural language manner, thereby obtaining a first prompt for input into the large-scale language processing model, where the first prompt is used to determine attribute items of the product.

In yet other examples, the first prompt may be obtained not only by integrating the title information, description information, and optional attribute items, but also in combination with the attention attributes of products in the second e-commerce platform. In this case, integrating the title information, the description information, and the optional attribute items to obtain a first prompt for input into the large-scale language processing model may include: acquiring attention attributes corresponding to products in the second e-commerce platform; and integrating the title information, the description information, the optional attribute items, and the attention attribute items to obtain a first prompt for determining attribute items of the product.

For products on the second e-commerce platform, the attribute items of a product may be related not only to the title information, description information, and optional attribute items of the product, but also to the attention attributes of the products on the second e-commerce platform. Therefore, in order to accurately obtain the prompt information used to determine the attribute items of a product, the attention attributes corresponding to the products on the second e-commerce platform may be obtained. It should be noted that different products may correspond to different attention attributes; therefore, attention attributes may be described by product category. In this case, obtaining the attention attributes corresponding to the products on the second e-commerce platform may include: obtaining the target category corresponding to the products on the second e-commerce platform; and determining the attention attributes corresponding to the products on the second e-commerce platform based on the target category, thereby effectively ensuring the accuracy and reliability of determining the attention attributes of products on the second e-commerce platform.

After obtaining the attention attributes corresponding to the products on the second e-commerce platform, the title information, description information, optional attribute items, and attention attributes may be integrated. Specifically, the title information, description information, optional attribute items, and attention attributes may be integrated in natural language, so as to stably obtain the first prompt for input into the large-scale language processing model.

Step S302: processing the first prompt using the large-scale language processing model to obtain the target attribute items of the products on the second e-commerce platform.

After obtaining the first prompt, the large-scale language processing model may be used to process the first prompt, i.e., the first prompt is input into the large-scale language processing model to obtain the target attribute items of the products on the second e-commerce platform output by the large-scale language processing model, thereby effectively ensuring the accuracy and reliability of determining the target attribute items of products on the second e-commerce platform.

In yet other examples, the present embodiment is capable of not only acquiring the target attribute item of products in the second e-commerce platform, but also acquiring the name information of products in the second e-commerce platform; specifically, after determining at least one second e-commerce platform different from the first e-commerce platform and the product information of products in the second e-commerce platform, the method in the present embodiment may further include: integrating the title information and description information to obtain a second prompt for input into the large-scale language processing model, where the second prompt is used to determine the name of the product; and processing the second prompt using the large-scale language processing model to obtain the product name of products in the second e-commerce platform.

Specifically, in order to accurately store and process the structured product information of products, while acquiring the structured product information of products, the present embodiment is also capable of acquiring the product name of products in the second e-commerce platform; since the product name and the target attribute item belong to different types of information, the product name and the target attribute item may be generated using different prompt information, i.e., the prompt information used to determine the attribute items of the product may be different from the prompt information used to determine the name information of the product. Similar to the implementation of step S301 described above, after acquiring the title information and description information, the title information and description information may be integrated; specifically, a preset integration method for integrating the title information and description information may be acquired; and the title information and description information may be integrated according to a preset template in a natural language manner, so that a second prompt for input into the large-scale language processing model may be obtained, where the second prompt is used to determine the name of the product.

After obtaining the second prompt, the large-scale language processing model may be used to process the second prompt, i.e., the second prompt is input into the large-scale language processing model, to obtain the product name of products in the second e-commerce platform as output by the large-scale language processing model, thereby effectively ensuring the accuracy and reliability of determining the product name of products in the second e-commerce platform.

It should be noted that the large-scale language processing model used to process the first prompt and the large-scale language processing model used to process the second prompt are the same model; for the large-scale language processing model, the number of tasks to be processed may be one or more; when the number of tasks is one, i.e., the number of pieces of prompt information to be input into the large-scale language processing model is one, the large-scale language processing model may directly analyze and process the prompt information, thereby completing the task processing operation; when the number of tasks is more than one, i.e., the number of pieces of prompt information to be input into the large-scale language processing model is more than one, the large-scale language processing model may process multiple tasks synchronously or asynchronously, thereby completing the task processing operation.

Specifically, when the large-scale language processing model is used to synchronously process multiple tasks, multiple pieces of prompt information corresponding to the multiple tasks may be batch-input into the large-scale language processing model, and the large-scale language processing model may synchronously process the multiple pieces of prompt information, so that the processing results respectively corresponding to the multiple pieces of prompt information as output by the large-scale language processing model may be obtained; it should be noted that when the large-scale language processing model synchronously processes multiple pieces of prompt information, if the processing result for the current piece of prompt information has not yet been obtained, processing of the next piece of prompt information is prohibited until the processing result corresponding to the current piece of prompt information is obtained; after the processing result corresponding to the current piece of prompt information is obtained, the processing result may be displayed, and the next piece of prompt information may be processed; meanwhile, the large-scale language processing model may be used to directly obtain the processing result, and the processing result may be displayed.

When the large-scale language processing model is used to asynchronously process multiple tasks, the prompt information corresponding to the multiple tasks may be asynchronously input into the large-scale language processing model, and the large-scale language processing model may asynchronously process the multiple pieces of prompt information; it should be noted that when the large-scale language processing model sequentially processes multiple pieces of prompt information, if the processing result for the current piece of prompt information has not yet been obtained, the next piece of prompt information may be processed directly; when the processing result corresponding to the current piece of prompt information is obtained, the user may be notified through a messaging mechanism that the task processing result has been obtained, and whether the task processing result needs to be displayed may be determined based on the user's execution operation on the prompt information sent by the messaging mechanism; specifically, when the user performs a click operation on the prompt information sent by the messaging mechanism, the task processing result may be displayed; when the user does not perform a click operation on the prompt information sent by the messaging mechanism, displaying the task processing result is prohibited, thereby effectively implementing asynchronous processing of multiple tasks using the large-scale language processing model.

In this embodiment, by integrating the title information, description information, and optional attribute items, a first prompt for input into the large-scale language processing model is obtained; by integrating the title information and description information, a second prompt for input into the large-scale language processing model is obtained; the large-scale language processing model is then used to process the first prompt to obtain the target attribute items of products in the second e-commerce platform, and the large-scale language processing model is used to process the second prompt to obtain the product name of products in the second e-commerce platform, thereby effectively achieving accurate and reliable acquisition of the structured information and product names of products in the second e-commerce platform, and further improving the practicability of the method.

FIG. 4 is a schematic flowchart of another method for determining structured product information provided by an embodiment of the present disclosure. On the basis of the above embodiments, and with reference to FIG. 4, for the structured information of a product, it may include not only target attribute items but also product selling point information. Product selling point information may refer to information about the distinctive features and characteristics of a product, and the aforementioned features or characteristics may be inherent to the product or created by operations and maintenance personnel. In this case, in order to accurately obtain the structured information of a product, the method in this embodiment may further include:
Step S401: integrating the title information and the description information to obtain a third prompt for input into the large-scale language processing model, where the third prompt is used to determine the product selling point information of the product.

Here, when the structured information includes product selling point information, the product selling point information is associated with the title information and the description information. Therefore, in order to accurately determine the product selling point information, after obtaining the title information and the description information, the title information and the description information may be integrated. Specifically, a preset template for integrating the title information and the description information may be obtained, and the title information and the description information may be integrated in natural language according to the preset template, so as to obtain the third prompt for input into the large-scale language processing model, where the third prompt is used to determine the product selling point information of the product.

Step S402: processing the third prompt using the large-scale language processing model to obtain the preliminary selling point information of the products on the second e-commerce platform.

After obtaining the third prompt, the large-scale language processing model may be used to process the third prompt, i.e., the third prompt is input into the large-scale language processing model to obtain the preliminary selling point information of the products on the second e-commerce platform output by the large-scale language processing model. The quantity of the obtained preliminary selling point information may be multiple.

Step S403: obtaining the attention attributes corresponding to the products on the second e-commerce platform.

Since the quantity of preliminary selling point information of a product that can be obtained through the large-scale language processing model is often multiple, in order to accurately determine the selling point information of the products on the second e-commerce platform, the attention attributes corresponding to the products on the second e-commerce platform may be obtained. It should be noted that different products may correspond to different attention attributes. In some examples, the attention attributes may be obtained based on the category information of the products on the second e-commerce platform. In this case, obtaining the attention attributes corresponding to the products on the second e-commerce platform may include: obtaining a pre-configured mapping relationship between product categories and attention attributes, and determining the category information of the products on the second e-commerce platform; and determining the attention attributes corresponding to the products on the second e-commerce platform based on the mapping relationship and the category information of the products, thereby effectively ensuring the accuracy and reliability of determining the attention attributes.

Step S404: determining the target selling point information of the products on the second e-commerce platform based on the attention attributes and the preliminary selling point information.

Since the preliminary selling point information is obtained based on the title information and the description information of the products on the second e-commerce platform, the quantity of the preliminary selling point information is often multiple. The selling point information obtained at this point is relatively broad and lacks specificity. In order to accurately determine the target selling point information of the products on the second e-commerce platform, a filtering operation may be performed on the obtained preliminary selling point information based on the attention attributes, so as to determine the target selling point information of the products on the second e-commerce platform. In this case, the quantity of target selling point information may be one or more, and the obtained target selling point information may be a portion of the preliminary selling point information.

In some examples, determining the target selling point information of the products on the second e-commerce platform based on the attention attributes and the preliminary selling point information may include: obtaining, from the preliminary selling point information, matching selling point information corresponding to the attention attributes; and determining the matching selling point information as the target selling point information of the products on the second e-commerce platform.

Specifically, after obtaining the preliminary selling point information, the attribute information corresponding to each piece of preliminary selling point information may be determined. The attribute information corresponding to each piece of preliminary selling point information is then analyzed and compared with the attention attributes. When matching attribute information that matches the attention attributes exists, the matching selling point information corresponding to the attention attributes is obtained. The matching selling point information at this point may be a portion of the preliminary selling point information. After obtaining the matching selling point information, it is determined as the target selling point information of the products on the second e-commerce platform, thereby ensuring the accuracy and reliability of determining the target selling point information. When no matching attribute information that matches the attention attributes exists, the matching selling point information may be determined as a null value, and the target selling point information obtained at this point may be the preliminary selling point information.

In other examples, the target selling point information may be obtained by analyzing and processing the attention attributes and the preliminary selling point information using a pre-trained machine learning model or neural network model. In this case, determining the target selling point information of the products on the second e-commerce platform based on the attention attributes and the preliminary selling point information may include: obtaining a pre-trained machine learning model or neural network model, inputting the attention attributes and the preliminary selling point information into the machine learning model or neural network model, and obtaining the target selling point information of the products on the second e-commerce platform output by the machine learning model or neural network model, thereby effectively ensuring the accuracy and reliability of determining the target selling point information.

In this embodiment, by integrating the title information and the description information to obtain a third prompt for input into the large-scale language processing model, and then using the large-scale language processing model to process the third prompt to obtain the preliminary selling point information of the products on the second e-commerce platform, and obtaining the attention attributes corresponding to the products on the second e-commerce platform, and subsequently determining the target selling point information of the products on the second e-commerce platform based on the attention attributes and the preliminary selling point information, the accuracy and reliability of determining the target selling point information are effectively ensured. Market opportunity mining operations may then be performed based on the target selling point information, further improving the practicality of the method.

FIG. 5 is a schematic flowchart of yet another method for determining structured product information provided by an embodiment of the present disclosure. On the basis of any one of the above embodiments, and with reference to FIG. 5, after determining the structured information of the products on the second e-commerce platform, the method in this embodiment may not only perform update and adjustment operations on the attribute items of the first e-commerce platform based on the attribute items of the second e-commerce platform, but may also perform update and adjustment operations on the attribute values of the first e-commerce platform based on the attribute values of the second e-commerce platform. In this case, the method in this embodiment may further include:
Step S501: obtaining the first attribute value set corresponding to the target attribute items in the first e-commerce platform and the second attribute value set corresponding to the target attribute items in the second e-commerce platform.
Step S502: when the second attribute value set is a subset of the first attribute value set, keeping the first attribute value set unchanged.
Step S503: when the second attribute value set is different from the first attribute value set, updating the first attribute value set based on the second attribute value set to obtain an updated first attribute value set.

For the first e-commerce platform and the second e-commerce platform, the first e-commerce platform includes not only attribute items used to configure products, but may also include attribute value sets corresponding to the attribute items. For example, when the attribute item is "color," the attribute value set may be "red, green, blue, yellow, orange, etc."; when the attribute item is "material," the attribute value set may be "linen, silk, polyester, wool, knitted fabric, mulberry silk, etc." Since the second e-commerce platform and the first e-commerce platform are different e-commerce platforms, different e-commerce platforms may correspond to different attribute value sets. Therefore, in order to update the attribute value set included in the first e-commerce platform based on the attribute value set included in the second e-commerce platform, after determining the structured product information of the products in the second e-commerce platform, the first attribute value set corresponding to the target attribute item in the first e-commerce platform and the second attribute value set corresponding to the target attribute item in the second e-commerce platform may be obtained.

After obtaining the first attribute value set and the second attribute value set, the first attribute value set and the second attribute value set may be analyzed and compared to obtain the inter-set relationship between the first attribute value set and the second attribute value set. When the inter-set relationship indicates that the second attribute value set is a subset of the first attribute value set, this indicates that the range corresponding to the first attribute value set is larger and includes the second attribute value set, which further indicates that the attribute value set included in the first e-commerce platform is relatively comprehensive, and thus the first attribute value set may be kept unchanged.

When the inter-set relationship indicates that the second attribute value set is different from the first attribute value set (intersecting or non-intersecting), this indicates that the first attribute value set and the second attribute value set either intersect or do not intersect. In this case, the first attribute value set may be updated based on the second attribute value set to obtain an updated first attribute value set. In some examples, updating the first attribute value set based on the second attribute value set to obtain the updated first attribute value set may include: obtaining the attribute value intersection between the first attribute value set and the second attribute value set, where the attribute value intersection includes the common attribute values between the first attribute value set and the second attribute value set; determining the remaining attribute value set in the second attribute value set after excluding the attribute value intersection; and adding the attribute values in the remaining attribute value set to the first attribute value set to obtain the updated first attribute value set.

Specifically, in order to update the first attribute value set, the attribute value intersection between the first attribute value set and the second attribute value set may be obtained. It should be noted that when the first attribute value set and the second attribute value set intersect, the attribute value intersection contains one or more common attribute values between the first attribute value set and the second attribute value set; when the first attribute value set and the second attribute value set do not intersect, the attribute value intersection is an empty value. The attribute value intersection may then be excluded from the second attribute value set to obtain the remaining attribute value set in the second attribute value set after excluding the attribute value intersection. Since the attribute values included in the remaining attribute value set do not belong to the first attribute value set, the attribute values in the remaining attribute value set may be added to the first attribute value set to obtain the updated first attribute value set. This effectively achieves the update operation on the first attribute value set, further improves the stability and reliability of the first e-commerce platform, and ensures a good user experience.

In this embodiment, by obtaining the first attribute value set corresponding to the target attribute item in the first e-commerce platform and the second attribute value set corresponding to the target attribute item in the second e-commerce platform, when the second attribute value set is a subset of the first attribute value set, the first attribute value set is kept unchanged; when the second attribute value set is different from the first attribute value set, the first attribute value set is updated based on the second attribute value set to obtain the updated first attribute value set, thereby effectively achieving the operation of updating and adjusting the attribute values of the in-site platform based on the attribute values of the off-site platform when the attribute values in the in-site platform do not include the attribute values of the off-site platform, and keeping the attribute values of the in-site platform unchanged when the attribute values in the in-site platform include the attribute values of the off-site platform, which further improves the comprehensiveness and reliability of the attribute values in the in-site platform and further enhances the practicability of the method.

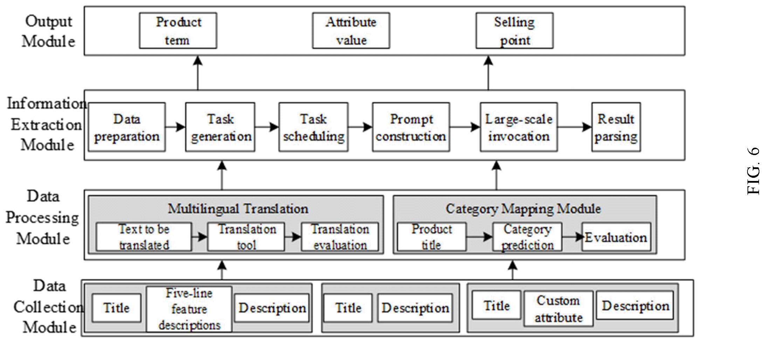

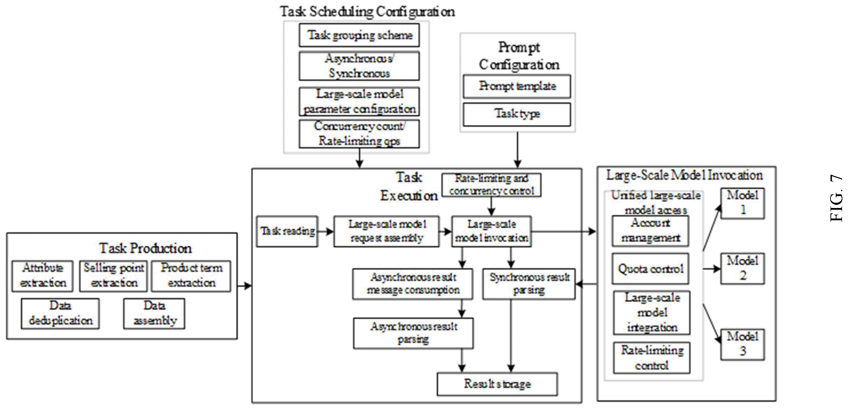

In a specific application, referring to FIG. 6 and FIG. 7, taking the first e-commerce platform as the in-site platform and the second e-commerce platform as the off-site platform as an example, this application embodiment provides a method for understanding structured product information based on a large-scale model. The execution subject of this understanding method is an understanding system, which may include a data collection module, a data processing module, a category mapping module, an information extraction module, and an output module. Based on the aforementioned understanding system, the method for understanding structured product information that can be implemented in this embodiment may include the following steps:
Step 1: using the data collection module to obtain in-site data of in-site products in the in-site platform and off-site data of off-site products in the off-site platform.

The in-site data of in-site products in the in-site platform may include: in-site categories, in-site attribute items, and in-site attribute value sets corresponding to the in-site attribute items. Specifically, the in-site data may be obtained by data collection performed by the data collection module in the in-site platform. The off-site data may be obtained by traversing the off-site platform level by level according to categories using information extraction techniques. The off-site data of off-site products in the off-site platform (which may be outstanding platforms or competing platforms in the industry, etc.) may include: off-site product titles and off-site product descriptions.

In addition, when the data collection module collects in-site data and off-site data, the in-site data and off-site data may be automatically collected at a preset frequency (e.g., once every 3 days, once per month, etc.) or under a preset condition (e.g., when the data increment of the off-site data reaches a preset threshold), or may alternatively be passively collected in response to a user's triggering action. Those skilled in the art may flexibly configure or adjust this based on specific application scenarios or requirements.

It should be noted that the number of off-site platforms may be multiple, and different off-site platforms may correspond to different off-site data. For example, off-site platform 1 may correspond to off-site product titles, five-line feature descriptions of off-site products (five pieces of description information used to describe the selling points of off-site products), and other descriptions of off-site products; off-site platform 2 may correspond to off-site product titles, custom attribute items, and description information of off-site products; off-site platform 3 may correspond to off-site product titles and description information of off-site products, etc.

In yet some other examples, since large-scale language models used to determine structured product information often require prompt information in English, while in-site data and off-site data are often not in English, in order to accurately perform the determination operation of structured product information, after obtaining the in-site data and off-site data, the in-site data and off-site data may be used as text to be translated, and then the data processing module may be used to perform translation operations on the in-site data and off-site data, thereby obtaining in-site translated data and off-site translated data.

Specifically, the data processing module may be configured with at least one translation tool. When using at least one translation tool to perform translation operations on the in-site data and off-site data, the translation results output by each translation tool may be obtained, and then the translation results may be evaluated. Specifically, the translation cost and translation accuracy corresponding to each translation tool may be obtained, and then based on the translation cost and translation accuracy, one target translation tool may be selected from the at least one translation tool, so that the translation result output by the target translation tool is determined as the in-site translated data and off-site translated data obtained after performing translation operations on the in-site data and off-site data.

Step 2: using the category mapping module and the in-site data to process the off-site data to obtain optional attribute items corresponding to off-site products in the off-site platform.

In order to improve the accuracy of attribute matching between the in-site platform and the off-site platform, category mapping may first be performed on the in-site data and off-site data to use the in-site attribute items to define the optional attribute item range of off-site products. Specifically, after obtaining the product titles of off-site products in the off-site platform, the category mapping module and the category information and attribute items of in-site products in the in-site data may be used to perform category mapping on the off-site products to obtain optional attribute items corresponding to the off-site products in the off-site platform.

In order to further improve the accuracy of determining the optional attribute items, after obtaining the optional attribute items, a reasonableness evaluation may be performed on the obtained optional attribute items. In some examples, the optional attribute items may be displayed, a user's input operation on the displayed optional attribute items may be obtained, and based on the input operation, it may be determined whether the optional attribute items are reasonable. When the optional attribute items are determined to be reasonable, the optional attribute items may be retained unchanged; when the optional attribute items are determined to be unreasonable, the unreasonable optional attribute items may be deleted, thereby effectively implementing the evaluation and reasonableness detection operation on the optional attribute items.

Step 3: using the information extraction module to analyze and process the off-site data and optional attribute items to generate a first prompt for determining the product term of the off-site product, a second prompt for determining the attribute value of the off-site product, and a third prompt for determining the selling point information of the off-site product.

After obtaining the off-site data, the information extraction module may be used to analyze and process the off-site data and optional attribute items to generate corresponding prompt information for different information extraction tasks, including a first prompt, a second prompt, and a third prompt. The prompt information may then be input into a large-scale language processing model (which may be a pre-configured ChatGPT model) to obtain structured product information output by the large-scale language processing model. The structured product information may specifically include: product terms, attribute values, selling point information, etc. of the product.

It should be noted that, since structured product information may specifically include: the name information, attribute values, and product selling point information of products, the product information extraction operation may be divided into the following three types of tasks for processing:

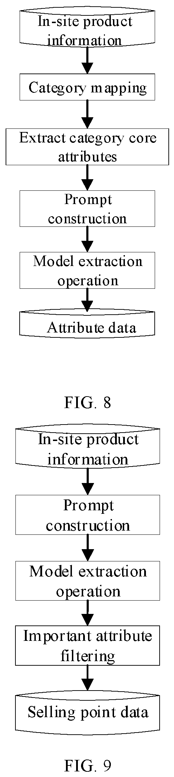

Attribute value extraction task: As shown in FIG. 8, a corresponding prompt template is configured according to the task type. After acquiring the off-site product information and the optional attribute items corresponding to the off-site product, the category core attribute corresponding to the off-site product may be determined based on the category information of the off-site product. The off-site product information, the optional attribute items, and the category core attribute may then be integrated in natural language according to the prompt template, thereby obtaining the first prompt corresponding to the attribute value extraction task. The first prompt information is input into the large-scale language processing model to perform a model extraction operation, thereby obtaining the attribute data output by the large-scale language processing model.

Selling point extraction task: As shown in FIG. 9, a corresponding prompt template is configured according to the task type. After acquiring the off-site product information, the off-site product information may be integrated in natural language according to the prompt template, thereby obtaining the second prompt corresponding to the selling point extraction task. The second prompt information is input into the large-scale language processing model to perform a model extraction operation, thereby obtaining the preliminary selling point data output by the large-scale language processing model. After acquiring the preliminary selling point data, the important attributes corresponding to the off-site product may be determined, and the preliminary selling point data may then be filtered based on the important attributes, thereby obtaining the target selling point data.

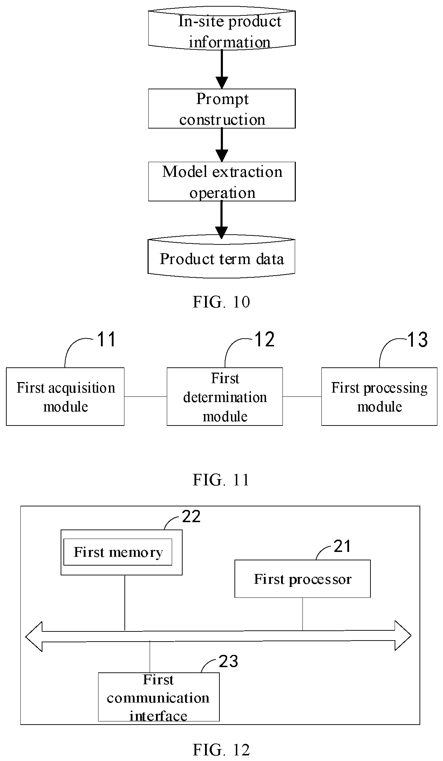

Name extraction task: as shown in FIG. 10, a corresponding prompt template is configured according to the task type; after obtaining the off-site product information, the off-site product information may be integrated in the manner of natural language and the prompt template, so as to obtain a third prompt corresponding to the name extraction task; the third prompt information is input into the large-scale language processing model to perform a model extraction operation, thereby obtaining product term data output by the large-scale language processing model.

Step 4: inputting the first prompt, the second prompt, and the third prompt into the large-scale language model to obtain the name information of off-site products, the attribute values of off-site products, and the product selling point information of off-site products output by the large-scale language model.

Step 5: after obtaining the product selling point information of the off-site products, the category core attributes corresponding to the off-site products may be determined, and the product selling point information may be filtered based on the category core attributes to obtain the target selling point information corresponding to the off-site products.

Specifically, since the product selling point information of the off-site products is obtained by analyzing and processing the off-site products, the quantity of selling point information so obtained is relatively large, i.e., there are many and broad selling points. In order to obtain more definitive selling point information, the category core attributes of the off-site products may be used to screen and filter the selling point information, thereby obtaining more definitive selling point information. Product recommendation operations may then be performed based on the product selling point information of the off-site products, thereby realizing the mining operation of opportunity markets.

Step 6: after obtaining the attribute values of the off-site products, the attribute values of the in-site products and the attribute values of the off-site products may be analyzed and compared; when the attribute values of the off-site products are not stored in the in-site platform, the attribute values of the off-site products may be updated and added to the in-site platform, thereby realizing the update and adjustment operation of the attribute values in the in-site platform.

Step 7: after obtaining the attribute items of the off-site products, the attribute items of the in-site products and the attribute items of the off-site products may be analyzed and compared; when the attribute items of the off-site products are not stored in the in-site platform, the attribute items of the off-site products may be updated and added to the in-site platform, thereby realizing the update and adjustment operation of the attribute items in the in-site platform.

In order to ensure the reasonableness of the update and adjustment operation, before updating and adding the attribute items of the off-site products to the in-site platform, the attribute items of the off-site products may be displayed on a display interface, so that operations and maintenance personnel can judge whether the attribute items displayed on the display interface are reasonable; when the attribute items are reasonable attribute items, updating and adding the attribute items of the off-site products to the in-site platform is permitted; when the attribute items are unreasonable attribute items, updating and adding the attribute items of the off-site products to the in-site platform is prohibited.

Step 8: when using the large-scale language model to analyze and process each processing task, the task processing mode corresponding to each processing task may be determined, and each processing task may be analyzed and processed based on the task processing mode.

Among these, when using the large-scale language model to perform task processing operations, the large-scale language model may first be configured; at this point, large-scale model parameters may be obtained (including task scheduling configurations such as temperature value, concurrency count, and rate-limiting qps (Query per Second)), and the corresponding large-scale language model may be obtained based on the foregoing large-scale model parameters.

In addition, when the number of processing tasks corresponding to the large-scale language processing model is multiple, in order to improve the quality and efficiency of task processing, the multiple processing tasks may be grouped, and the task processing mode corresponding to each processing task may be determined. The task processing mode may include a synchronous processing mode and an asynchronous processing mode. When the large-scale language model is invoked to synchronously process multiple tasks, the task processing results may be directly obtained and parsed, and the obtained task processing results may be displayed and stored. When the large-scale language model is invoked to asynchronously process multiple tasks, the task processing results obtained by the large-scale language model may be retrieved through a messaging mechanism, and the task processing results may be stored. It should be noted that when the task processing results have not yet been obtained, the large-scale language model may perform corresponding processing operations on other tasks.

It should be noted that, for the large-scale language model, the large-scale language model may be configured with invocation interfaces for adapting to each module, providing a unified interface while supporting functions such as account management, quota control, and rate-limiting control, thereby effectively ensuring the stable and reliable use of the large-scale model.

The technical solution provided by this application embodiment effectively enables accurate understanding of structured information of products on off-site platforms based on a large-scale language processing model and product data in in-site platforms, thereby ensuring the accuracy and reliability of structured product information acquisition. Compared with the prior art, this solution has the following advantages: (1) general generalization capability for different site data and task types, as well as powerful semantic understanding capability; specifically, the large-scale model may be obtained by training or configuring based on training data and model parameters, and thereafter, based on different prompt templates, multiple task types and product information extraction operations for different sites may be implemented, effectively expanding the applicable scope of the method; (2) improved training efficiency: for the large-scale model, configuration may be performed through prompt templates and task scheduling without going through the full process of model training, and different information extraction tasks may correspond to the same large-scale model, which greatly improves the quality and efficiency of model training and increases the efficiency of task processing; in particular, for new tasks, no new model needs to be trained - new task processing operations can be rapidly supported through task scheduling and prompt construction; additionally, after obtaining the structured information of a product, opportunity market analysis operations or CPV system update and completion operations may be performed based on the structured information, further improving the practicality of the method and facilitating market promotion and application.

FIG. 11 is a schematic structural diagram of an apparatus for determining structured product information provided by an application embodiment of the present disclosure. Referring to FIG. 11, this embodiment provides an apparatus for determining structured product information, which is used to execute the method for determining structured product information shown in FIG. 2 above. The apparatus for determining structured product information may include:
a first acquisition module 11, configured to acquire category information and attribute items of products in a first e-commerce platform; a first determination module 12, configured to determine at least one second e-commerce platform different from the first e-commerce platform and product information of products in the second e-commerce platform; the first determination module 12, configured to determine, based on the category information and attribute items, optional attribute items corresponding to products in the second e-commerce platform; a first processing module 13, configured to determine, based on the product information and the optional attribute items, structured information of products in the second e-commerce platform, where the structured information includes at least target attribute items.

In some instances, when the first determination module 12 determines the optional attribute items corresponding to products in the second e-commerce platform based on the category information and attribute items, the first determination module 12 is configured to perform: determining, from the category information, a target category corresponding to products in the second e-commerce platform; determining the attribute items corresponding to the target category as the optional attribute items corresponding to products in the second e-commerce platform.

In some instances, the product information includes title information and description information; when the first processing module 13 determines the structured product information of products in the second e-commerce platform based on the product information and the optional attribute items, the first processing module 13 is configured to perform: integrating the title information, the description information, and the optional attribute items to obtain a first prompt for input into a large-scale language processing model, where the first prompt is used to determine attribute items of the product; processing the first prompt using the large-scale language processing model to obtain target attribute items of products in the second e-commerce platform.

In some instances, when the first processing module 13 integrates the title information, the description information, and the optional attribute items to obtain the first prompt for input into the large-scale language processing model, the first processing module 13 is configured to perform: acquiring attention attributes corresponding to products in the second e-commerce platform; integrating the title information, the description information, the optional attribute items, and the attention attributes to obtain the first prompt for determining attribute items of the product.

In some instances, when the first processing module 13 acquires the attention attributes corresponding to products in the second e-commerce platform, the first processing module 13 is configured to perform: acquiring a target category corresponding to products in the second e-commerce platform; determining, based on the target category, the attention attributes corresponding to products in the second e-commerce platform.

In some examples, after determining at least one second e-commerce platform different from the first e-commerce platform and the product information of products in the second e-commerce platform, the first processing module 13 in this embodiment is configured to: integrate the title information and the description information to obtain a second prompt for input into the large-scale language processing model, where the second prompt is used to determine the product name of the product; and use the large-scale language processing model to process the second prompt to obtain the product name of the product in the second e-commerce platform.

In some instances, the structured product information further includes: product selling point information; the first processing module 13 in this embodiment is configured to perform: integrating the title information and the description information to obtain a third prompt for input into the large-scale language processing model, where the third prompt is used to determine the product selling point information of the product; processing the third prompt using the large-scale language processing model to obtain preliminary selling point information of products in the second e-commerce platform; acquiring attention attributes corresponding to products in the second e-commerce platform; determining, based on the attention attributes and the preliminary selling point information, target selling point information of products in the second e-commerce platform.

In some instances, when the first processing module 13 determines the target selling point information of products in the second e-commerce platform based on the attention attributes and the preliminary selling point information, the first processing module 13 is configured to perform: acquiring, from the preliminary selling point information, matching selling point information corresponding to the attention attributes; determining the matching selling point information as the target selling point information of products in the second e-commerce platform.

In some instances, after determining the structured product information of products in the second e-commerce platform, the first acquisition module 11 and the first processing module 13 in this embodiment are configured to perform the following steps: the first acquisition module 11, configured to acquire a first attribute value set corresponding to the target attribute items in the first e-commerce platform and a second attribute value set corresponding to the target attribute items in the second e-commerce platform; the first processing module 13, configured to, when the second attribute value set is a subset of the first attribute value set, keep the first attribute value set unchanged; when the second attribute value set differs from the first attribute value set, update the first attribute value set based on the second attribute value set to obtain an updated first attribute value set.

In some instances, when the first processing module 13 updates the first attribute value set based on the second attribute value set to obtain the updated first attribute value set, the first processing module 13 is configured to perform: acquiring an attribute value intersection between the first attribute value set and the second attribute value set, where the attribute value intersection includes common attribute values between the first attribute value set and the second attribute value set; determining a remaining attribute value set in the second attribute value set excluding the attribute value intersection; adding the attribute values in the remaining attribute value set to the first attribute value set to obtain the updated first attribute value set.

In some instances, after determining the structured product information of products in the second e-commerce platform, the first processing module 13 in this embodiment is configured to perform: identifying whether target attribute items exist in the first e-commerce platform; if the target attribute items do not exist in the first e-commerce platform, adding the target attribute items to the first e-commerce platform to obtain updated attribute items of products in the first e-commerce platform.

In some instances, after determining the structured product information of products in the second e-commerce platform, the first acquisition module 11 and the first processing module 13 in this embodiment are configured to perform the following steps:
the first acquisition module 11, configured to acquire platform transaction data and attention attributes corresponding to products in the second e-commerce platform; the first processing module 13, configured to determine a product adjustment plan corresponding to the first e-commerce platform based on the structured product information, the platform transaction data, and the attention attributes of products in the second e-commerce platform.

The apparatus shown in FIG. 11 can execute the method of the embodiments shown in FIG. 1-FIG. 10; for parts not described in detail in this embodiment, reference may be made to the relevant descriptions of the embodiments shown in FIG. 1-FIG. 10. For the execution process and technical effects of this technical solution, refer to the descriptions in the embodiments shown in FIG. 1-FIG. 10, which will not be repeated here.

In one possible design, the structure of the apparatus for determining structured product information shown in FIG. 11 may be implemented as an electronic device, which may be a mobile phone, a tablet computer, a server, or various other devices. As shown in FIG. 12, the electronic device may include: a first processor 21 and a first memory 22. The first memory 22 is configured to store a program for the corresponding electronic device to execute the method for determining structured product information provided in the embodiments shown in FIG. 1 to FIG. 10, and the first processor 21 is configured to execute the program stored in the first memory 22.

The program includes one or more computer instructions, wherein when the one or more computer instructions are executed by the first processor 21, the following steps can be implemented: acquiring category information and attribute items of products in the first e-commerce platform; determining at least one second e-commerce platform different from the first e-commerce platform and product information of products in the second e-commerce platform; determining, based on the category information and the attribute items, optional attribute items corresponding to products in the second e-commerce platform; determining, based on the product information and the optional attribute items, structured product information of products in the second e-commerce platform, where the structured product information includes at least target attribute items.

Further, the first processor 21 is further configured to execute all or part of the steps in the embodiments shown in FIG. 1-FIG. 10.

The structure of the electronic device may further include a first communication interface 23, configured for the electronic device to communicate with other devices or communication networks.

In addition, embodiments of the present disclosure provide a computer storage medium for storing computer-executable instructions used by an electronic device, which includes a program related to the method for determining structured product information in the method embodiments shown in FIG. 1-FIG. 10.

Furthermore, this embodiment provides a computer program product, the computer program product comprising: a computer program that, when executed by a processor of an electronic device, causes the processor to execute the method for determining structured product information in the method embodiments shown in FIG. 1-FIG. 10.

The apparatus embodiments described above are merely illustrative, where the units described as separate components may or may not be physically separate, and the components shown as units may or may not be physical units, i.e., they may be located in one place or distributed across multiple network units. Some or all of the modules may be selected according to actual needs to achieve the purpose of the solution of this embodiment. Those of ordinary skill in the art can understand and implement this without any creative effort.

From the descriptions of the above embodiments, those skilled in the art can clearly understand that each embodiment can be implemented by means of adding necessary general-purpose hardware platforms, and of course can also be implemented by a combination of hardware and software. Based on such understanding, the above technical solution, in essence or the part that contributes to the prior art, can be embodied in the form of a computer product. The present disclosure may adopt the form of a computer program product implemented on one or more computer-usable storage media (including but not limited to disk storage, CD-ROM (Compact Disc Read-Only Memory), optical storage, etc.) containing computer-usable program code.

The present disclosure is described with reference to flowcharts and/or block diagrams of methods, devices (systems), and computer program products according to embodiments of the present disclosure. It should be understood that each process and/or block in the flowcharts and/or block diagrams, as well as combinations of processes and/or blocks in the flowcharts and/or block diagrams, can be implemented by computer program instructions. These computer program instructions may be provided to a processor of a general-purpose computer, special-purpose computer, embedded processor, or other programmable device to produce a machine, such that the instructions executed by the processor of the computer or other programmable device produce an apparatus for implementing the functions specified in one or more processes in the flowcharts and/or one or more blocks in the block diagrams.

These computer program instructions may also be stored in a computer-readable memory capable of directing a computer or other programmable device to operate in a specific manner, such that the instructions stored in the computer-readable memory produce an article of manufacture including an instruction device that implements the functions specified in one or more flows of the flowchart and/or one or more blocks of the block diagram. These computer program instructions may also be loaded onto a computer or other programmable device to cause a series of operational steps to be performed on the computer or other programmable device to produce computer-implemented processing, such that the instructions executed on the computer or other programmable device provide steps for implementing the functions specified in one or more flows of the flowchart and/or one or more blocks of the block diagram. In a typical configuration, a computing device includes one or more processors (Central Processing Unit, CPU), input/output interfaces, network interfaces, and memory. Memory may include non-persistent storage, random access memory (Random Access Memory, RAM) and/or non-volatile memory in forms such as read-only memory (Read-Only Memory, ROM) or flash memory (flash RAM) in computer-readable media. Memory is an example of computer-readable media.

Computer-readable media, including permanent and non-permanent, removable and non-removable media, may implement information storage by any method or technology. The information may be computer-readable instructions, data structures, modules of programs, or other data. Examples of computer storage media include, but are not limited to, Phase Change Random Access Memory (Phase Change Random Access Memory, PRAM), Static Random Access Memory (Static Random Access Memory, SRAM), Dynamic Random Access Memory (Dynamic Random Access Memory, DRAM), other types of Random Access Memory (RAM), Read-Only Memory (ROM), Electrically Erasable Programmable Read-Only Memory (Electrically Erasable Programmable Read-Only Memory, EEPROM), flash memory or other memory technologies, Compact Disc Read-Only Memory (Compact Disc Read-Only Memory, CD-ROM), Digital Video Disc (Digital Video Disc, DVD), or other optical storage, magnetic cassette tapes, magnetic tape magnetic disk storage or other magnetic storage devices, or any other non-transmission media that may be used to store information accessible by a computing device. As defined herein, computer-readable media does not include transitory computer-readable media (transitory media), such as modulated data signals and carrier waves.

Finally, it should be noted that: the above embodiments are only used to illustrate the technical solutions of the present disclosure, not to limit them; although the present disclosure has been described in detail with reference to the foregoing embodiments, those of ordinary skill in the art should understand that: they may still modify the technical solutions described in the foregoing embodiments, or make equivalent substitutions for some of the technical features therein; and such modifications or substitutions do not cause the essence of the corresponding technical solutions to depart from the spirit and scope of the technical solutions of the embodiments of the present disclosure.

## Claims

1. A method for determining structured product information, wherein the method comprises:
acquiring category information and attribute items of products in a first e-commerce platform;
determining at least one second e-commerce platform different from the first e-commerce platform and product information of products in the second e-commerce platform;
determining optional attribute items corresponding to products in the second e-commerce platform based on the category information and attribute items;
determining structured information of products in the second e-commerce platform based on the product information and the optional attribute items, the structured information at least comprising target attribute items.

2. The method of claim 1, wherein determining optional attribute items corresponding to products in the second e-commerce platform based on the category information and attribute items comprises:
determining, from the category information, a target category corresponding to products in the second e-commerce platform;
determining attribute items corresponding to the target category as optional attribute items corresponding to products in the second e-commerce platform.

3. The method of claim 1, wherein the product information comprises title information and description information; determining the structured information of products in the second e-commerce platform based on the product information and the optional attribute items comprises:
integrating the title information, description information, and optional attribute items to obtain a first prompt for input into a large-scale language processing model, wherein the first prompt is used to determine attribute items of a product;
processing the first prompt using the large-scale language processing model to obtain the target attribute items of products in the second e-commerce platform.

4. The method of claim 3, wherein integrating the title information, description information, and optional attribute items to obtain a first prompt for input into a large-scale language processing model comprises:
acquiring attention attributes corresponding to products in the second e-commerce platform;
integrating the title information, description information, optional attribute items, and attention attributes to obtain a first prompt for determining attribute items of a product.

5. The method of claim 4, wherein acquiring attention attributes corresponding to products in the second e-commerce platform comprises:
acquiring a target category corresponding to products in the second e-commerce platform;
based on the target category, determining attention attributes corresponding to products in the second e-commerce platform.

6. The method according to any one of claims 3-5, wherein, after determining at least one second e-commerce platform different from the first e-commerce platform and the product information of products in the second e-commerce platform, the method further comprises:
integrating the title information and the description information to obtain a second prompt for input into the large-scale language processing model, wherein the second prompt is used to determine a product name of a product;
using the large-scale language processing model to process the second prompt to obtain product names of the products in the second e-commerce platform.

7. The method according to any one of claims 3-6, wherein the structured information further comprises: product selling point information, and the method further comprises:
integrating the title information and the description information to obtain a third prompt for input into the large-scale language processing model, wherein the third prompt is used to determine product selling point information of a product;
processing the third prompt using the large-scale language processing model to obtain preliminary selling point information of products in the second e-commerce platform;
acquiring attention attributes corresponding to products in the second e-commerce platform;
based on the attention attributes and the preliminary selling point information, determining target selling point information of products in the second e-commerce platform.

8. The method according to claim 7, wherein determining target selling point information of products in the second e-commerce platform based on the attention attributes and the preliminary selling point information comprises:
from the preliminary selling point information, obtaining matching selling point information corresponding to the attention attributes;
determining the matching selling point information as the target selling point information of products in the second e-commerce platform.

9. The method according to any one of claims 1-8, wherein, after determining structured information of products in the second e-commerce platform, the method further comprises:
acquiring a first attribute value set corresponding to target attribute items in the first e-commerce platform and a second attribute value set corresponding to the target attribute items in the second e-commerce platform;
when the second attribute value set is a subset of the first attribute value set, keeping the first attribute value set unchanged;
when the second attribute value set differs from the first attribute value set, updating the first attribute value set based on the second attribute value set to obtain an updated first attribute value set.

10. The method according to claim 9, wherein updating the first attribute value set based on the second attribute value set to obtain an updated first attribute value set comprises:
acquiring an attribute value intersection between the first attribute value set and the second attribute value set, wherein the attribute value intersection comprises common attribute values between the first attribute value set and the second attribute value set;
determining a remaining attribute value set in the second attribute value set excluding the attribute value intersection;
adding attribute values in the remaining attribute value set to the first attribute value set to obtain an updated first attribute value set.

11. The method according to any one of claims 1-10, wherein, after determining structured information of products in the second e-commerce platform, the method further comprises:
identifying whether target attribute items exist in the first e-commerce platform;
when the target attribute items do not exist in the first e-commerce platform, adding the target attribute items to the first e-commerce platform to obtain updated attribute items of products in the first e-commerce platform.

12. The method according to any one of claims 1-11, wherein, after determining the structured product information of products in the second e-commerce platform, the method further comprises:
acquiring platform transaction data and attention attributes corresponding to products in the second e-commerce platform;
determining, based on the structured product information, platform transaction data, and attention attributes of products in the second e-commerce platform, a product adjustment plan corresponding to the first e-commerce platform.

13. An apparatus for determining structured product information, comprising:
a first acquisition module, configured to acquire category information and attribute items of products in a first e-commerce platform;
a first determination module, configured to determine at least one second e-commerce platform different from the first e-commerce platform and product information of products in the second e-commerce platform;
the first determination module, configured to determine, based on the category information and attribute items, optional attribute items corresponding to products in the second e-commerce platform;
a first processing module, configured to determine, based on the product information and the optional attribute items, structured information of products in the second e-commerce platform, wherein the structured information includes at least target attribute items.

14. An electronic device, comprising: a memory and a processor; wherein the memory is configured to store one or more computer instructions, and the one or more computer instructions, when executed by the processor, implement the method according to any one of claims 1-12.

15. A computer-readable storage medium, wherein the computer-readable storage medium stores computer-executable instructions, and the computer-executable instructions, when executed by a processor, are configured to implement the method according to any one of claims 1-12.

16. A computer program product, comprising a computer program, wherein the computer program, when executed by a processor, implements the method according to any one of claims 1-12.
